# EUROPEAN PATENT SPECIFICATION

(11) **EP 0 899 608 B1**
(45) Date of publication and mention of the grant of the patent: **13.10.2004**
(21) Application number: 98115437.0
(22) Date of filing: 17.08.1998
(51) Int. Cl.: G03B 13/12

(54) **Viewfinder for a photographic camera**
Sucher für photographische Kamera
Viseur pour appareil photographique

(30) Priority: 28.08.1997 DE 19737484
(43) Date of publication of application: 03.03.1999
(73) Proprietor: EASTMAN KODAK COMPANY, Rochester, New York 14650 (US)
(72) Inventor: Freund, Michael N., 73099 Adelberg (DE)
(74) Representative: Weber, Etienne Nicolas

(56) References cited:
- DE-A- 4 109 566
- US-A- 5 530 510
- US-A- 5 652 932
- PATENT ABSTRACTS OF JAPAN vol. 1996, no. 11, 29 November 1996 (1996-11-29) & JP 08 190131 A (CANON INC.), 23 July 1996 (1996-07-23)

## Description

The invention relates to a viewfinder for a photographic camera having a device connected to a camera lens for adjusting the image field of the viewfinder to the adjustable focal length of the camera lens.

Known camera viewfinders are provided with means for adjusting the image field to those of the lens of the camera. For example, still cameras are provided with viewfinders whose entrance apertures can be altered by changing the mask and adapted to the various focal lengths of the lenses used in the camera. Each mask aperture however corresponds only to a certain focal length setting.

In photographic cameras featuring lenses with continuously changing focal length, i.e. so-called zoom lenses, it is desirable to have continuously changing viewfinders too, that are linked to the zoom lens such that the image field observed in the viewfinder corresponds precisely to that of the light-sensitive surface of the film.

Viewfinders provided with continuously adjustable framing masks and capable of connection to zoom lenses are known, for example from DE-PS-12 14 079. The known masks, in which all four sides of the frame are simultaneously adjustable, require however complicated devices that prohibit a simple and dependable mode of operation. Furthermore, devices of this complexity are relatively expensive and not suitable for use in cameras of very simple design, such as so-called single-use cameras.

The use of a viewfinder not adjusted to the lens focal length leads to unacceptable photographic results when it is remembered that wide-angle lenses have an angle of view exceeding 90°, while telephoto lenses have less than 25°.

The object underlying the present invention is therefore to provide a device of simple design, with few components and dependable operation, for adjusting the viewfinder's image field to the focal length of the camera lens used.

This object is attained in accordance with the invention for a viewfinder of the generic type in that the device comprises an L-shaped frame part and a rectangular frame part covering the latter, these being linked by a film hinge, in that a guide lever flexibly engages on the one hand a corner of the rectangular frame part and on the other hand, in the area of the film hinge, the L-shaped frame part and rests pivotably on a bearing pin on the case side, and in that the frame parts are mounted movably in relation to one another inside the camera case depending on the focal length of the camera case.

Since this device comprises a single-piece, flat injection-molded plastic component, the object is achieved in outstanding fashion. In addition, adaptation of the viewfinder's image field aperture is achieved continuously using the focal length adjuster of the camera lens by a projection being provided in the area of the corner of the L-shaped frame part opposite that corner of the rectangular frame part in which the guide lever engages, said projection cooperating with a cam controlled by the camera lens as a function of the set focal length. During this adjusting movement, the two frame parts move by the same amount on the diagonal between the cam and the linking point of the guide lever on the rectangular frame part.

In detail, the invention is such that the L-shaped frame part and the rectangular frame part each have an arm, said arms being connected at their free ends to form the film hinge.

An embodiment of this type facilitates the manufacture of the final form of the device and saves considerable time during the installation thereof into the viewfinder.

In an advantageous modification, the frame parts have sliding surfaces to which guide surfaces provided inside the camera case are allocated, and the guide lever rests pivotably on a bearing pin on the case side.

Advantageously, a spring element is provided on the arm of the L-shaped frame part and is in flexible contact with that surface of the guide lever opposite the bearing pin in the operating state of the device.

As a result of this measure, the projection of the L-shaped frame part is always up against the lens-controlled cam and the frame parts can return automatically to their maximum aperture position.

Further advantages and features can be taken from the description of an embodiment of the invention shown in the drawing and from the sub-claims.

In the drawing,

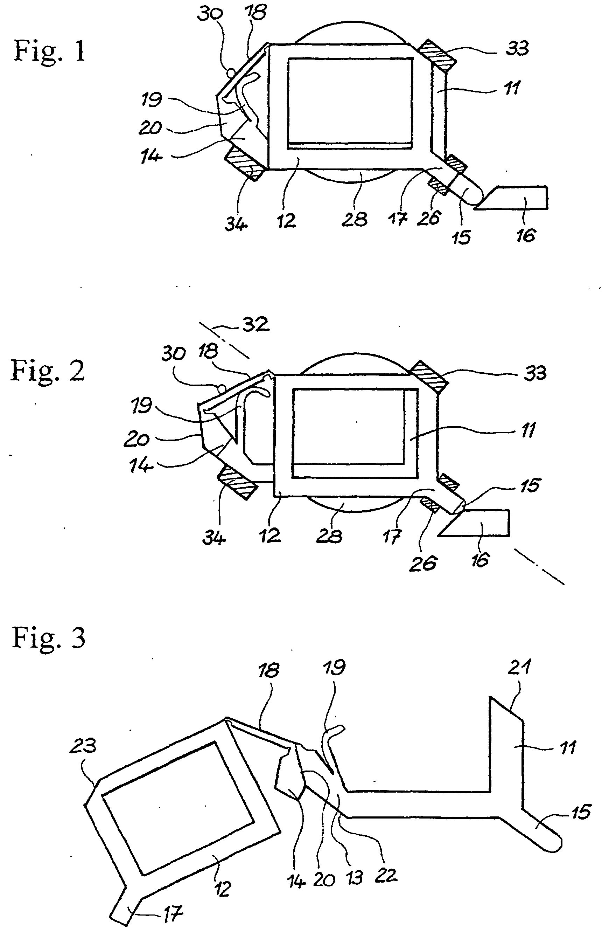

- Fig. 1 shows: the device in accordance with the invention in its initial position in a diagrammatic view,
- Fig. 2 shows: the device according to Fig. 1 in its operating position with a reduced-size image field of the viewfinder in a diagrammatic view,
- Fig. 3 shows: the device according to Fig. 1 as a manufacture-suitable component in a front view, and
- Fig. 4 shows: a camera viewfinder with the installed device according to Fig. 1 in a diagrammatic view.

The device shown in the drawing is used in a camera viewfinder 10 to continuously adjust the image field of the viewfinder to the variable focal length of a camera lens.

The device shown as an embodiment is made as a flat injection-molded plastic component and comprises an L-shaped frame part 11 forming an inner mask part and a rectangular frame part 12 forming an outer mask part. The two frame parts 11 and 12 are provided with an arm 13 and 14 respectively which are linked to one another using a hinge 20. In this way, the frame parts 11 and 12 can be folded over one another to form a complete mask for their operating position inside the camera viewfinder 10.

In the area of its corner, the frame part 11 has a projection 15 guided in a bearing 26 on the camera case side and having a rounded-off free end that cooperates with a cam 16 controlled by the focal length adjustment of the camera lens.

The frame part 12 has in the area of one corner a guide arm 17 that in the folded-over state of the frame parts 11 and 12 overlaps the projection 15 flush at the side while leaving its rounded-off free end section free.

At the corner of the rectangular frame part 12 diagonally opposite the corner having the guide arm 17, a guide lever 18 is linked whose other end is flexibly jointed in the area of the film hinge 20 to the arm 14 of the frame part 12.

A spring element 19 is integrally molded onto the arm 13 of the frame part 11 and is, in the operating state of the device, in contact with the inner surface of the guide lever 18 facing the frame part 12 with flexible pretensioning and always forces the device into its initial operating position.

On the frame parts 11 and 12, parallel to an imaginary diagonal 32 of the image field section, aligned sliding surfaces 21, 22, and 23 are provided, with the diagonal 32 passing through the extension of the projection 15. The sliding surfaces 21, 22 and 23 work with guide surfaces 33 and 34 arranged in the camera case 25, while the guide lever 18 is pivotably in contact with a bearing pin 30 fixed on the case.

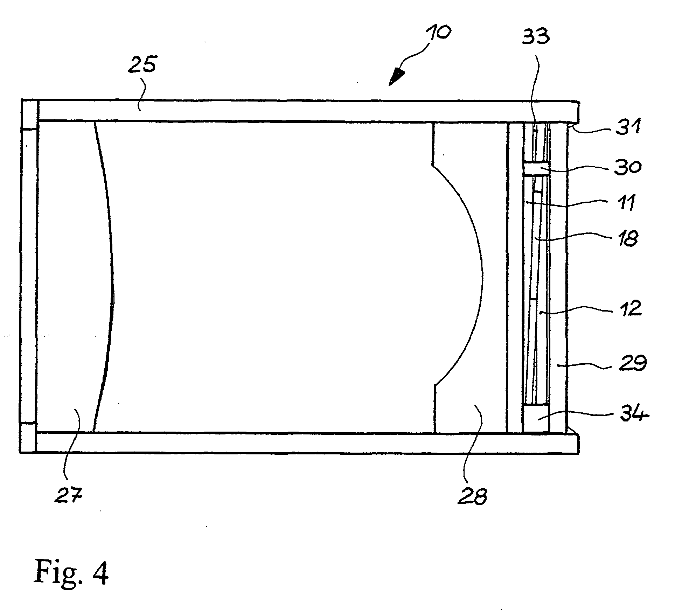

A camera viewfinder 10 into which the device is installed is shown diagrammatically in Fig. 4. The camera viewfinder is integrated into the camera case 25. A viewfinder eyepiece 27 and a viewfinder front lens 28 are provided. The device comprising the folded-over frame parts 11 and 12 is arranged in front of the front lens 28 and held in its operating position by a transparent plane-parallel plate 29. The plate 29 is held in position by elastic snap-in elements 31.

During adjustment of the focal length of a camera lens, force is exerted via the inclined surface of the cam 16 and via the projection 15 on the device such that the L-shaped frame part 11 moves in the direction of the imaginary diagonal 32. At the same time, the guide lever 18 up against the bearing pin 30 is swiveled clockwise via the arms 13 and 14 connected by the film hinge 20 such that the frame part 12 is moved by the same amount along the diagonal and in the opposite direction to the frame part 11. This movement leads to an infinitely variable adjustment of the viewfinder image field to the focal length set at the camera lens.

## Claims

1. Viewfinder for a photographic camera, said viewfinder including an adjustable framing mask connected to a camera lens for adjusting the image field of the viewfinder to the adjustable focal length of the camera lens, **characterized in that** the framing mask comprises an L-shaped frame part (11) and a rectangular frame part (12) being linked by and folded about a film hinge (20) so that the L-shaped frame part covers the rectangular frame part; **in that** a guide lever (18) flexibly engages on the one hand a corner of said rectangular frame part (12) and on the other hand, in the area of said film hinge (20), said L-shaped frame part (11) and rests pivotably on a bearing pin (20) on the case side, and **in that** said frame parts are mounted movably in relation to one another inside the camera case depending on the focal length of said camera case.

2. Viewfinder according to Claim 1, **characterized in that** the L-shaped frame part (11) and the rectangular frame part (12) each have an arm (13 and 14 respectively), said arms being connected at their free ends to form the film hinge.

3. Viewfinder according to Claims 1 and 2, **characterized in that** the frame parts (11 and 12) have sliding surfaces (21, 22, and 23) to which guide surfaces (33 and 34) provided inside the camera case are allocated.

4. Viewfinder according to Claims 1 to 3, **characterized in that** a spring element (19) is provided on the arm (13) of the L-shaped frame part and is in flexible contact with that surface of the guide lever (18) opposite the bearing pin (30) in the operating state of the device.

5. Viewfinder according to Claims 1 to 4, **characterized in that** a projection is provided in the area of the corner of the L-shaped frame part (11) opposite that corner of the rectangular frame part in which the guide lever engages, said projection cooperating with a cam (16) controlled by the camera lens as a function of the set focal length.

6. Viewfinder according to Claims 1 to 5, **characterized in that** the device comprises a single-piece, flat injection-molded plastic component.

7. A camera comprising a viewfinder according to Claims 1 to 6, **characterized in that** the device is held between the front lens (28) of the camera viewfinder (10) and a plane-parallel transparent plate (29) in the camera case (25).

## Patentansprüche

1. Sucher für eine fotografische Kamera, welcher eine einstellbare Bildfeldmaske aufweist, die mit einem Kameraobjektiv zum Anpassen des Bildfeldes des Suchers an die einstellbare Brennweite des Kameraobjektivs verbunden ist, **dadurch gekennzeichnet, dass** die Bildfeldmaske ein L-förmiges Rahmenteil (11) und ein rechtwinkliges Rahmenteil (12) aufweist, die durch ein Filmscharnier (20) verbunden und um dieses herum gefaltet sind, so dass das L-förmige Rahmenteil das rechtwinklige Rahmenteil abdeckt; dass ein Führungshebel (18) einerseits mit einer Ecke des rechtwinkligen Rahmenteils (12) und andererseits mit dem L-förmigen Rahmenteil (11) im Bereich des Filmscharniers (20) federnd in Eingriff steht und an einem gehäuseseitigen Lagerstift (30) schwenkbar anliegt; und dass die Rahmenteile je nach Brennweite des Kameragehäuses innerhalb der Kamera gegeneinander bewegbar angeordnet sind.

2. Sucher nach Anspruch 1, **dadurch gekennzeichnet, dass** das L-förmige Rahmenteil (11) und das rechtwinklige Rahmenteil (12) jeweils einen Arm (13 bzw. 14) aufweisen, die an ihren freien Enden miteinander verbunden sind und so das Filmscharnier bilden.

3. Sucher nach den Ansprüchen 1 und 2, **dadurch gekennzeichnet, dass** die Rahmenteile (11 und 12) Gleitflächen (21, 22, 23) aufweisen, denen im Kameragehäuse angeordnete Gleitflächen (33 und 34) zugeordnet sind.

4. Sucher nach den Ansprüchen 1-3, **dadurch gekennzeichnet, dass** am Arm (13) des L-förmigen Rahmenteils ein Federelement (19) angeordnet ist, welches im Betriebszustand der Vorrichtung mit der gegenüber dem Lagerstift (30) befindlichen Oberfläche des Führungshebels (18) in federndem Kontakt steht.

5. Sucher nach den Ansprüchen 1-4, **dadurch gekennzeichnet, dass** im Bereich der Ecke des L-förmigen Rahmenteils (11) gegenüber der Ecke des rechtwinkligen Rahmenteils (12), an welcher der Führungshebel (18) angreift, ein Vorsprung (15) vorgesehen ist, welcher mit einer durch das Kameraobjektiv gesteuerten Nockenscheibe (16) in Abhängigkeit von der festgelegten Brennweite kooperiert.

6. Sucher nach den Ansprüchen 1-5, **dadurch gekennzeichnet, dass** die Vorrichtung eine einstückig ausgebildete, flache, spritzgussgeformte Kunststoffkomponente aufweist.

7. Kamera mit einem Sucher nach den Ansprüchen 1 - 6, **dadurch gekennzeichnet, dass** die Vorrichtung zwischen der Frontlinse (28) des Kamerasuchers (10) und einer planparallelen, transparenten Platte (29) im Kameragehäuse (25) gehalten ist.

## Revendications

1. Viseur pour un appareil photographique, ledit viseur comprenant un masque de cadrage réglable relié à un objectif d'appareil de prise de vues pour régler le champ d'image du viseur à la distance focale réglable de l'objectif d'appareil de prise de vues, **caractérisé en ce que** le masque de cadrage comprend une partie de cadre en forme de L (11) et une partie de cadre rectangulaire (12) qui sont articulées par une charnière de film (20) et repliées autour de celle-ci de sorte que la partie de cadre en forme L recouvre la partie de cadre rectangulaire, **en ce qu'**un levier de guidage (18) vient en contact de façon flexible d'une part avec un coin de ladite partie de cadre rectangulaire (12) et d'autre part, dans la zone de ladite charnière de film (20), avec ladite partie de cadre en forme de L (11) et repose avec possibilité de pivotement sur une broche de support (20) sur le côté du boîtier, et **en ce que** les parties de cadre sont montées de façon mobile l'une par rapport à l'autre à l'intérieur du boîtier d'appareil de prise de vues en fonction de la distance focale dudit boîtier d'appareil de prise de vues.

2. Viseur selon la revendication 1, **caractérisé en ce que** la partie de cadre en forme de L (11) et la partie de cadre rectangulaire (12) comportent chacune un bras (13 et 14 respectivement), les bras étant reliés à leurs extrémités libres pour former la charnière de film.

3. Viseur selon les revendications 1 et 2, **caractérisé en ce que** les parties de cadre (11 et 12) présentent des surfaces de coulissement (21, 22 et 23) auxquelles des surfaces de guidage (33 et 34) disposées à l'intérieur dudit boîtier d'appareil de prise de vues sont affectées.

4. Viseur selon les revendications 1 à 3, **caractérisé en ce qu'**un élément de ressort (19) est disposé sur le bras (13) et la partie de cadre en forme de L et est en contact flexible avec la surface du levier de guidage (18) opposée à la broche de support (30) dans l'état de fonctionnement du dispositif

5. Viseur selon les revendications 1 à 4, **caractérisé en ce qu'**une protubérance est prévue dans la zone du coin de la partie de cadre en forme de L (11) opposée au coin de la partie de cadre rectangulaire où le levier de guidage s'engage, ladite protubérance coopérant avec une came (16) commandée par l'objectif de l'appareil de prise de vues en fonction de la distance focale réglée.

6. Viseur selon les revendications 1 à 5, **caractérisé en ce que** le dispositif comprend un composant plat en matière plastique moulée par injection en une seule pièce.

7. Appareil de prise de vues comprenant un viseur selon les revendications 1 à 6, **caractérisé en ce que** le dispositif est maintenu entre la lentille avant (28) du viseur de l'appareil de prise de vues (10) et une lame transparente à faces planes et parallèles (29) dans le boîtier de l'appareil de prise de vues (25).
